## Europäisches Patentamt
## European Patent Office
## Office européen des brevets

(19)

(11) Veröffentlichungsnummer: **0 082 247**
**B1**

(12) **EUROPÄISCHE PATENTSCHRIFT**

(45) Veröffentlichungstag der Patentschrift:
**24.07.85**

(51) Int. Cl.⁴: **A 61 C 17/04**

(21) Anmeldenummer: **82107237.8**

(22) Anmeldetag: **10.08.82**

(54) **Zahnärztliche Absaugeinrichtung.**

(30) Priorität: **19.11.81 DE 3145838**

(43) Veröffentlichungstag der Anmeldung:
**29.06.83 Patentblatt 83/26**

(45) Bekanntmachung des Hinweises auf die Patenterteilung:
**24.07.85 Patentblatt 85/30**

(84) Benannte Vertragsstaaten:
**AT CH DE FR GB IT LI SE**

(56) Entgegenhaltungen:
**EP - A - 0 023 036**
**DE - A - 2 713 321**
**FR - A - 1 457 948**
**GB - A - 1 106 858**
**US - A - 2 440 987**

(73) Patentinhaber: **Siemens Aktiengesellschaft, Berlin und München Wittelsbacherplatz 2, D-8000 München 2 (DE)**

(72) Erfinder: **Kratochwilla, Hans Michael, Ziegelhüttenstrasse 6, D-6143 Lorsch (DE)**

EP 0 082 247 B1

## Beschreibung

Die Erfindung bezieht sich auf eine zahnärztliche Absaugeinrichtung zum Absaugen von flüssigen und festen Teilchen, mit einem in die Saugleitung zwischengeschalteten Separierbehälter, in welchem das Sauggut zyklonartig einströmt, und in welchem die abgesaugten Teilchen von der Saugluft getrennt, gesammelt und nach Erreichen eines bestimmten Füllstandes im Behälter über einen Abflusskanal abgeleitet werden.

Derartige Einrichtungen sind beispielsweise aus DE-A-2713321, GB-A-1106858 und DE-A-2929804 bekannt.

Problematisch bei all diesen Absaugeinrichtungen ist, dass sich im Laufe der Zeit an den Wandungen des Separierbehälters feste Teilchen absetzen und dort antrocknen können. Um dies zu vermeiden, ist es aus Druckschrift DE-A-2929804 bekannt, in den Behälter ständig Spülwasser einzuleiten und damit die Behälterwandung zu benetzen. Eine solche Einrichtung benötigt also einen zusätzlichen Anschluss für Spülwasser und hat demgemäss auch einen laufenden Spülwasserverbrauch.

Bei jenen Absaugeinrichtungen, bei denen zur Messung des Füllstandes im Behälter eine Schwimmer-Einrichtung vorgesehen ist, mit deren Hilfe bei Erreichen eines bestimmten Füllstandes die Saugluft, z.B. durch Abschalten der Saugpumpe, abgesperrt, oder ein den Abflusskanal öffnendes Ventil betätigt wird, besteht das Problem, dass nach jedem Steigen und Sinken des Flüssigkeitspegels der Schwimmer abtrocknet. Auf der Schwimmeroberseite kann sich wiederum ein Belag aus Festkörperteilchen bilden, der wegen der Verwendung des spezifisch schweren Amalgams in der zahnärztlichen Praxis das Gewicht des Schwimmers in kurzer Zeit derart stark vergrössert, dass dadurch der Schaltpunkt zum Abschalten der Saugpumpe, Absperren der Saugleitung oder Öffnen des Ventils verändert wird.

Aufgabe der vorliegenden Erfindung ist es, eine zahnärztliche Absaugeinrichtung der eingangs genannten Art dahingehend zu verbessern, dass für den Separierbehälter mit einfacheren Mitteln und unter Vermeidung einer ständigen Zufuhr von Spülwasser ein besserer Reinigungseffekt erzielt wird und ein Ablagern von Feststoffteilchen an den Behälterwandungen, und bei jenen Einrichtungen, die eine Schwimmer-Einrichtung aufweisen, auch am Schwimmer, zu verhindern und damit eine Veränderung des Schaltpunktes zu vermeiden.

Die gestellte Aufgabe wird gemäss der Erfindung dadurch gelöst, dass im Behälter wenigstens ein Schwimm- und Schwebekörper frei beweglich angeordnet ist, dessen Form, Volumen und Gewicht so bemessen ist, dass er bei leerem Behälter vom Luftstrom mitgerissen und bei vorhandener Flüssigkeit im Behälter unter Eigendrehung auf dieser schwimmt.

Der im Behälter frei bewegliche Schwimm- und Schwebekörper wird durch das zyklonartig im Behälter einströmende Sauggut einerseits dann, wenn im Behälter Flüssigkeit ist, ständig in Eigendrehung gehalten, wodurch ein Ansetzen von Festkörperteilchen am Schwimm- und Schwebekörper verhindert wird; andererseits wird bei leerem bzw. nahezu leerem Behälter der Schwimm- und Schwebekörper von dem umströmenden Luftstrom mitgerissen und in Rotation versetzt, wobei er an der Behälterinnenwand entlang reibt und diese so von sich ansetzenden Festkörperteilchen befreit. Als Schwimm- und Schwebekörper kommen vorteilhafterweise eine oder mehrere Kugeln zur Anwendung, die durch die einströmende Saugluft mit sehr hoher Geschwindigkeit an den Behälterwandungen entlang rotieren.

Der Schwimm- und Schwebekörper kann bei jenen Einrichtungen, bei denen der Füllstand über eine Schwimmer-Einrichtung gemessen und bei Erreichen eines bestimmten Füllstandes über ein Betätigungsglied ein Schalt- oder Steuervorgang ausgelöst wird, gleichsam zur Verstellung des Betätigungselementes vorgesehen werden. Dadurch, dass im Gegensatz zu bisherigen Schwimmer-Konstruktionen der Schwimm- und Schwebekörper nicht mit dem Betätigungsglied verbunden ist, können sich am Schwimm- und Schwebekörper selbst keine Festkörperteilchen ablagern. Der bei einer Neuanlage eingestellte Schaltpunkt bleibt demnach unverändert. Ein weiterer Vorteil ist darin zu sehen, dass an der Führung des Betätigungsgliedes kaum Querkräfte auftreten, wie sie durch Horizontalströmungen bei den bekannten Schwimmer-Einrichtungen entstehen können.

Weitere Vorteile liegen in der sehr einfachen Herstellung und Montage.

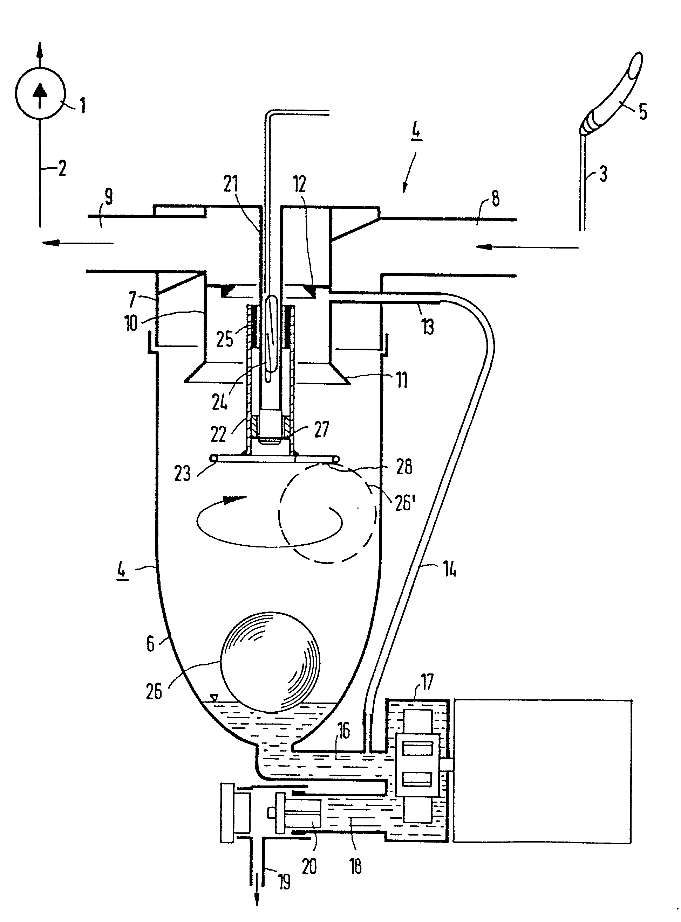

Ein Ausführungsbeispiel der Erfindung wird nachfolgend anhand der Zeichnung näher erläutert:

Die Figur zeigt in einer Prinzipdarstellung eine zahnärztliche Absaugeinrichtung mit einer Saugpumpe 1, an der saugseitig eine aus zwei Abschnitten 2, 3 bestehende Saugleitung angeschlossen ist, zwischen welchen Abschnitten ein Separierbehälter 4 geschaltet ist, in dem die von einer Saugdüse 5 beispielsweise aus einem Patientenmund abgesaugten flüssigen und festen Teilchen von der Saugluft separiert werden. Bei dem Separierbehälter 4 handelt es sich um einen an sich bekannten Zyklon-Abscheider mit einem zylindrischen, nach unten hin konisch sich verjüngenden unteren Behälterteil 6 und einem abnehmbar darauf gehalterten oberen Behälterteil 7. Der obere Behälterteil 7 weist einen tangential einmündenden Einlasskanal 8 auf und einen etwa in gleicher Höhe ausmündenden Auslasskanal 9, der mit dem Saugleitungsabschnitt 2 verbunden ist. Das Behälteroberteil 7 enthält einen zentrisch angeordneten, nach unten gerichteten Stutzen 10 mit einer Umlenkkante 11 und einer Staudruckblende 12. In Strömungsrichtung gesehen unmittelbar vor der Staudruckblende 12 mündet ein Anschluss 13 einer Bypassleitung 14. Der andere Anschluss der Bypassleitung 14 mündet in einen Abflusskanal 16, der gleichsam der saugseitige Kanal einer Kreiselpumpe 17 ist, deren druckseitiger Leitungskanal 18 in eine Abflussleitung 19 mündet. Im druckseitigen Leitungskanal 18 ist ferner noch ein Rückschlagventil 20 angeordnet, mit dem ein Rücksaugen von abgeflossener Flüssigkeit aus der Abflussleitung 19 verhindert wird. Dies ist erforderlich, weil die Pumpe 17 erst dann abdichtet und ihre Pumpwirkung entfaltet, wenn die Pumpe mit Flüssigkeit gefüllt ist.

Im Behälteroberteil 7 ist konzentrisch zum Stutzen 10 ein Rohr 21 angeordnet, über das teleskopartig ein zweites Rohr 22 gestülpt ist, an dessen unterem stirnseitigen Ende ein Ring 23 befestigt ist. Rohr 22 und Ring 23 dienen als Betätigungselement für ein Schaltelement 24 (Reed-Kontakt), mit dem z.B. die Saugpumpe 1 oder ein in der Saugleitung 2 angeordnetes Absperrventil ein- und ausgeschaltet werden kann. Zu diesem Zweck enthält das konzentrische zum Rohr 21 beweglich geführte Rohr 22 am oberen Ende einen ringförmig ausgebildeten, mit dem Schaltelement 24 zusammenwirkenden Permanentmagneten 25.

Mit 26 ist ein kugelförmiger Schwimm- und Schwebekörper bezeichnet, der im unteren, etwa kegelstumpfförmig auslaufenden und eiförmig ausgebauchten Behälterunterteil 6 auf der angesammelten Flüssigkeit schwimmend aufliegt und bei geringem Flüssigkeitsstand oder bei leerem Behälter von der durchströmenden Luft mitgerissen wird und dann kreiselnd um die Behälterinnenwand rotiert. Die eiförmige Ausbildung des unteren Behälterteiles hat sich hierzu in Verbindung mit dem kugelförmigen Schwimm- und Schwebekörper als besonders vorteilhaft erwiesen. Bei steigendem Flüssigkeitspegel liegt die Kugel 26 schwimmend auf der Flüssigkeit auf, wobei sie sich durch die Verwirbelung der Luft ständig in Eigenrotation befindet und auch an der Behälterwand entlang rotiert.

Das Betätigungsglied 22, 23 befindet sich bei steigendem Saugbetrieb zunächst in der gezeigten Stellung, die durch einen Anschlag 27 begrenzt ist. Der Permanentmagnet 25 befindet sich in Höhe des Schaltelementes 24. Der Schaltkontakt ist in dieser Position geschlossen, der Saugmotor 1 oder ein in der Saugleitung 2 angeordnetes Ventil aktiviert. Bei einem bestimmten Füllstand kommt die Kugel 26 an der Unterseite 28 des Ringes 23 zur Anlage (siehe gestrichelte Position 26'). Aufgrund der Grösse des Ringes 23 wird verhindert, dass die Kugel 26 in den oberen Behälterteil gelangen kann. Mit weiter ansteigendem Pegel wird das Rohr 22 angehoben, wodurch der Permanentmagnet 25 längs des Führungsrohres 21 verstellt wird. Nach einer gewissen Weglänge öffnet der Schaltkontakt, wodurch der Saugmotor 1 abgeschaltet oder das in der Saugleitung 2 angeordnete Ventil abgesperrt wird. Während dieser Absperr-Abschaltphase ist die Kreiselpumpe 17 in Betrieb, wodurch die im Behälter angesammelte Flüssigkeit sehr rasch in den Abflusskanal 19 gedrückt wird.

Die Kugel 26 wird infolge der Luftströmung bei vorhandener Flüssigkeit ständig gedreht, wodurch vermieden wird, dass an der Kugel Feststoffteilchen haften bleiben können. Bei leerem Behälter rotiert die Kugel infolge der tangential eingeblasenen Saugluft mit hoher Geschwindigkeit entlang der Behälterinnenwand, wodurch ein gewisser Reinigungseffekt sowohl beim Behälter als auch bei der Kugel erzielt wird.

Anstelle einer einzigen Kugel können auch mehrere Kugeln vorgesehen werden. Auch hinsichtlich der Gestaltung des bzw. der Schwimm- und Schwebekörper sind Modifikationen denkbar; jedoch hat sich die Kugelform als besonders vorteilhaft erwiesen. Modifikationen sind auch bezüglich des Ringes 23 denkbar; so kann eine gegebenenfalls mit Durchbrechungen versehene ebene Platte vorgesehen werden, die in ihren Abmessungen so dimensioniert ist, dass die Kugel 26 bei steigendem Flüssigkeitspegel nicht in den oberen Behälterteil eintreten kann; die im wesentlichen ebene Anlagefläche der Platte hat den Vorteil, dass die Kugel selbst im angedrückten Zustand an der Fläche abrollen kann, wodurch der besagte Reinigungseffekt auch bei anliegender Kugel gegeben ist.

## Patentansprüche

1. Zahnärztliche Absaugeinrichtung zum Absaugen von flüssigen und festen Teilchen, mit einem in die Saugleitung zwischengeschalteten Separierbehälter (4), in welchem das Sauggut zyklonartig einströmt und in welchem die abgesaugten Teilchen von der Saugluft getrennt, gesammelt und nach Erreichen eines bestimmten Füllstandes im Behälter über einen Abflusskanal (19) abgeleitet werden, dadurch gekennzeichnet, dass im Behälter (4) wenigstens ein Schwimm- und Schwebekörper (26) frei beweglich angeordnet ist, dessen Form, Volumen und Gewicht so bemessen ist, dass er bei leerem Behälter vom Luftstrom mitgerissen wird und bei vorhandener Flüssigkeit im Behälter unter Eigendrehung auf dieser schwimmt.

2. Zahnärztliche Absaugeinrichtung mit einer im Separierbehälter (4) angeordneten Schwimmer-Einrichtung, mit Hilfe derer über ein Schaltelement (24) bei einem bestimmten Füllstand im Behälter ein Ventil im Abflusskanal (19) geöffnet und/oder die Saugluft zum Behälter unterbrochen werden kann, nach Anspruch 1, dadurch gekennzeichnet, dass die Schwimmer-Einrichtung aus dem frei beweglichen Schwimm- und Schwebekörper (26) und einem im Behälter (4) geführten, auf das Schaltelement (24) wirkenden Betätigungsglied (22, 23) gebildet ist, welches so ausgebildet bzw. angeordnet ist, dass es bei Erreichen des Füllstandes durch den Schwimm- und Schwebekörper (26) verstellt wird.

3. Zahnärztliche Absaugeinrichtung mit einem Behälter (4) und einem in diesem vertikal geführten Rohr (22) als Betätigungsglied, nach Anspruch 2, dadurch gekennzeichnet, dass das Rohr (22) an seinem unteren Ende mit einem eine Anlagefläche (28) für den Schwimm- und Schwebekörper (26) aufweisenden und eine obere Begrenzung des Schwimm- und Schwebekörpers (26) bildenden Ansatz (23) versehen ist.

4. Zahnärztliche Absaugeinrichtung nach Anspruch 3, dadurch gekennzeichnet, dass der Ansatz (23) eine im wesentlichen plane Anlagefläche (28) für den Schwimm- und Schwebekörper (26) aufweist.

5. Zahnärztliche Absaugeinrichtung nach Anspruch 4, dadurch gekennzeichnet, dass der an dem Führungsrohr (22) befestigte Ansatz (23) als Ring ausgebildet ist.

6. Zahnärztliche Absaugeinrichtung nach einem der Ansprüche 1 bis 5, dadurch gekennzeichnet, dass als Schwimm- und Schwebekörper eine Kugel (26) vorgesehen ist.

7. Zahnärztliche Absaugeinrichtung nach einem der Ansprüche 1 bis 6, dadurch gekennzeichnet, dass der Separierbehälter (4) an seinem unteren, dem Abflusskanal (19) zugewandten Ende eiförmig ausgebildet ist.

## Claims

1. A dental aspirator for sucking off liquid and solid particles, comprising a separating container (4) which is inserted into the suction line and into which the sucked off material flows in the manner of a cyclone and in which the sucked off particles are separated from the suction air, collected and discharged by way of a discharge channel (19) when a predetermined filling level has been reached in the container, characterised in that at least one floating and suspended body (26) is arranged in the container (4) so as to be freely movable, the shape, volume and weight of which body (26) are such that, when the container is empty, it is carried forward by the air current, and when liquid is present in the container, it floats thereon with intrinsic rotation.

2. A dental aspirator comprising a float device arranged in the separating container (4), with the aid of which a valve can be opened in the discharge channel (19) and/or the suction air to the container can be interrupted by means of a switching element (24) at a predetermined filling level in the container, as claimed in Claim 1, characterised in that the float device is formed from the freely movable floating and suspended body (26) and an operating element (22, 23) which is guided in the container (4), which acts on the switching element (24) and which is so designed or arranged that it is adjusted by the floating and suspended body (26), when the filling level has been reached.

3. A dental aspirator comprising a container (4) and a pipe (22), which is vertically guided therein as an operating element, as claimed in Claim 2, characterised in that, at its lower end, the pipe (22) is provided with an extension (23) which forms a contact surface (28) for the floating and suspended body (26), and an upper limit of the floating and suspended body (26).

4. A dental aspirator as claimed in Claim 3, characterised in that the extension (23) has an essentially planar contact surface (28) for the floating and suspended body (26).

5. A dental aspirator as claimed in Claim 4, characterised in that the extension (27) which is fixed to the guide pipe (22) is formed as a ring.

6. A dental aspirator as claimed in one of Claims 1 to 5, characterised in that a ball (26) is provided as floating and suspended body.

7. A dental aspirator as claimed in one of Claims 1 to 6, characterised in that at its lower end which faces the discharge channel (19), the separating container (4) is egg-shaped.

## Revendications

1. Dispositif d'aspiration dentaire servant à aspirer des particules liquides et solides, comportant un récipient de séparation (4) intercalé dans la canalisation d'aspiration et dans lequel la substance aspirée pénètre selon un entraînement en cyclone, et dans lequel les particules aspirées sont séparées de l'air d'aspiration, sont collectées et sont évacuées, par l'intermédiaire d'un canal d'évacuation (19), lorsqu'un état de remplissage déterminé est atteint dans le récipient, caractérisé par le fait qu'à l'intérieur du réservoir (4) se trouve disposé, de manière à être librement mobile, au moins un corps flottant et en suspension (26), de telle sorte que, lorsque le récipient est vide, il est entraîné par le courant d'air et, lorsque du liquide est présent dans le récipient, il flotte sur ce dernier sous l'action de sa rotation propre.

2. Dispositif d'aspiration dentaire comportant un dispositif à flotteur disposé dans un récipient de séparation (4) et à l'aide duquel, pour un état de remplissage déterminé dans le récipient par l'intermédiaire d'un organe de commutation (24), une soupape située dans le canal d'évacuation (19) peut être ouverte et/ou l'air d'aspiration envoyé au récipient peut être interrompu, suivant la revendication 1, caractérisé par le fait que le dispositif à flotteur est constitué par le corps flottant et en suspension (26) librement mobile et par un organe de manœuvre (22, 23) guidé dans le récipient (4) et agissant sur l'organe de commutation (24) et qui est agencé et est disposé de telle sorte qu'il est réglé par le corps flottant et en suspension (26) lorsque l'état de remplissage est atteint.

3. Dispositif d'aspiration dentaire comportant un récipient (4) et un tube guidé verticalement dans ce récipient et servant d'organe de manœuvre, selon la revendication 2, caractérisé par le fait que le tube (22) est muni, au niveau de son extrémité inférieure, d'un appendice saillant (23) qui possède une surface d'application (28) pour le corps flottant et en suspension (26) et qui constitue une limitation supérieure du corps flottant et en suspension (26).

4. Dispositif d'aspiration dentaire suivant la revendication 3, caractérisé par le fait que l'appendice saillant (3) comporte une surface d'application (28) essentiellement plane pour le corps flottant et en suspension (26).

5. Dispositif d'aspiration dentaire suivant la revendication 4, caractérisé par le fait que l'appendice saillant (23) fixé sur le tube de guidage (22) est réalisé sous la forme d'un anneau.

7        **0 082 247**        8

6. Dispositif d'aspiration dentaire suivant l'une des revendications 1 à 5, caractérisé par le fait qu'une bille (26) est prévue en tant que corps flottant et en suspension.

7. Dispositif d'aspiration dentaire suivant l'une des revendications 1 à 6, caractérisé par le fait que le récipient de séparation (4) est réalisé en forme d'œuf, au niveau de son extrémité (29) tournée vers le canal d'évacuation (19).